(19) **Europäisches Patentamt**

**European Patent Office**

**Office européen des brevets**

(11) Veröffentlichungsnummer: **0 503 263 B1**

(12) **EUROPÄISCHE PATENTSCHRIFT**

(45) Veröffentlichungstag der Patentschrift: **01.03.95**

(51) Int. Cl.⁶: **F16K 49/00**, F02M 31/125

(21) Anmeldenummer: **92101759.6**

(22) Anmeldetag: **04.02.92**

(54) **Kraftstoffventil.**

(30) Priorität: **13.03.91 DE 4108035**

(43) Veröffentlichungstag der Anmeldung:
**16.09.92 Patentblatt 92/38**

(45) Bekanntmachung des Hinweises auf die
Patenterteilung:
**01.03.95 Patentblatt 95/09**

(84) Benannte Vertragsstaaten:
**AT BE CH DE DK ES FR GB GR IT LI LU NL SE**

(56) Entgegenhaltungen:
EP-A- 0 095 799    DE-C- 3 829 126
FR-A- 476 333      GB-A- 744 813
GB-A- 1 526 385    US-A- 1 461 520
US-A- 4 406 269

(73) Patentinhaber: **MAN NUTZFAHRZEUGE AG**
**Dachauer Strasse 667**
**D-80995 München (DE)**

(72) Erfinder: **Kreutmair, Josef, Dipl.-Ing. (FH)**
**Tegernbacher Strasse 25**
**W-8068 Pfaffenhofen (DE)**
Erfinder: **Simpkin, David Michael**
**Weidenweg 7**
**W-8066 Günding (DE)**
Erfinder: **Zöbl, Alfred**
**Bad Kissingen-Strasse 86**
**W-8000 München 80 (DE)**

**Beschreibung**

Die Erfindung bezieht sich auf ein Kraftstoffventil mit einem Kraftstoffeinlaß, einer Mengendosiereinrichtung und einem Kraftstoffauslaß.

Ventile dieser Art gibt es in zahlreichen Ausführungen zur dosierten Förderung oder Einspritzung von Kraftstoff in Brennanlagen, Verbrennungsmaschinen, Brenner zur Regenerierung von Partikelfiltern und dergleichen (siehe beispielsweise GB-A-1 526 385 oder FR-A-476 333).

In manchen Anwendungen, wie z.B. bei Regenerierungsbrennern von Partikelfiltern haben die Ventile aufgrund der benötigten kleinen Leistung enge Querschnitte für die Kraftstofförderung. Das hat bei Dieselkraftstoff insbesondere in kalten Jahreszeiten den Nachteil, daß Verstopfungen des Ventils durch den Ausfall von Paraffinen aus dem Kraftstoff eintreten.

Der Erfindung liegt die Aufgabe zugrunde, ein Kraftstoffventil der eingangs genannten Art zu schaffen, bei dem Betriebsstörungen bei Dieselkraftstoff nicht auftreten.

Die Aufgabe wird erfindungsgemäß durch die Merkmale des Anspruches 1 gelöst.

Durch das Gehäuse bildet sich ein Reservoir an Kraftstoff um das Ventil, in dem es durch das beheizbare Gehäuse soweit aufgewärmt wird, daß ein Ausflocken von Paraffin im Winterbetrieb nicht mehr eintritt.

Bei einem kontinuierlichen Durchfluß von Kraftstoff kann dessen Erwärmung auch bei sehr kalten Jahreszeiten dadurch gesichert werden, daß das Gehäuse mit Oberflächen vergrößernden Einrichtungen wie Rippen, Kugeln, Zwischenwänden und dergleichen ausgebildet ist.

Für die zuzuführende Wärmeenergie sorgt vorzugsweise ein Heizwiderstand bzw. Heizdraht, der um das Gehäuse gewickelt oder in der Gehäusewand eingelassen sein kann. Es ist dabei sicherzustellen, daß keine den Brennstoff zündenden Temperaturen erreicht werden. Dieses erfolgt z.B. durch geeignete Wahl eines Heizwiderstandes mit einer positiven Temperatur-Charakteristik (PTC-Kennlinie) oder durch Versorgung des Heizwiderstandes mit einer pulsweiten modulierten Spannung.

Mittels eines Reglers kann die Energiezufuhr zur Heizeinrichtung in Abhängigkeit von der Gehäusetemperatur und/oder der Umgebungstemperatur geregelt werden.

In der Zeichnung sind Ausführungsbeispiele der Erfindung schematisch dargestellt. Es zeigen:

Fig. 1            ein Kraftstoffventil mit zugehöriger Regeleinrichtung,

Fig. 2 und 3     je ein Ausführungsbeispiel des Ventilgehäuses,

Fig. 4            ein Spannung-Zeit-Diagramm.

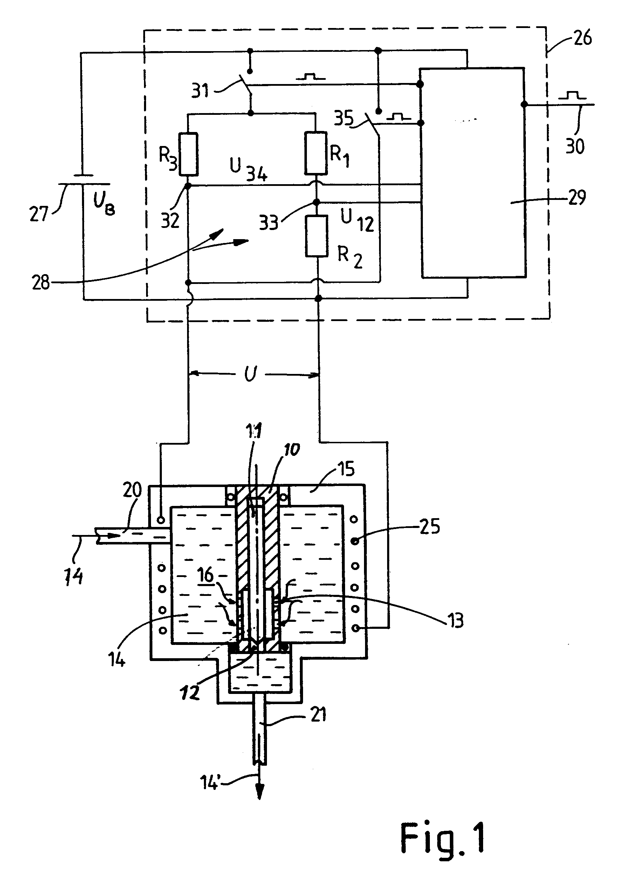

Fig. 1 zeigt ein Kraftstoffventil 10, das eine steuerbare Ventilnadel 11 hat, die in Zusammenwirkung mit einem Kraftstoffauslaß 12 eine Mengendosiereinrichtung für den durch Einlaßöffnungen 13 eintretenden Kraftstoff 10 bildet. Das Kraftstoffventil 10 ist von einem Gehäuse 15 umgeben, das um das Ventil 10 einen Ringraum 16 umschließt, der in Betrieb mit Kraftstoff 14 gefüllt ist. Das Gehäuse 15 weist ferner einen Einlaßstutzen 20 auf, durch den der Kraftstoff von einem Kraftstoffbehälter in den Ringraum 16 des Gehäuses 15 einfließt. Über einen Auslaßstutzen 21 gelangt der vom Ventil 10 dosierte Kraftstoff 14' zum Verbraucher, wie z.B. zu einer Brennerdüse oder dergleichen.

In die Gehäusewandung ist eine elektrische Heizwicklung bzw. ein Widerstandsdraht 25 eingelassen, der über ein Steuergerät 26 mit einer Gleichstromquelle 27 verbunden ist. Bei Anwendung des Kraftstoffventils in einem Fahrzeug ist die Stromquelle 27 die Bordbatterie.

Zur Messung und Überwachung der Temperatur des Kraftstoffventiles bzw. dessen Umgebung wird vorzugsweise ein Widerstandsthermometer angewandt, bei dem mittels einer Wheatstoneschen Brücke der Widerstand der Heizwicklung 25 gemessen und über einen Prozessor 29 anhand der Widerstand/Temperatur-Kennlinie des Widerstandsdrahtes 25 die Temperatur am Gehäuse 15 errechnet. Dazu wird als Widerstandsdraht 25 ein Kaltleiter, d.h. ein Material mit PTC-Kennlinie, wie z.B. Kupfer oder Nickel verwendet. Durch eine derartige Heizwicklung wird gleichzeitig eine Begrenzung der Aufheiztemperatur des Ventilgehäuses 15 gewährleistet.

Es ist selbstverständlich auch jede andere Temperatur-Meßmethode, z.B. mittels Meßfühler, anwendbar. Anstelle der Gehäusetemperatur kann die Regelung des Ventiles auch in Abhängigkeit der Umgebungstemperatur überwacht werden.

Das Steuergerät 26 wird beispielsweise mittels eines von Hand auslösbaren Impules 30 bei Bedarf in Betrieb gesetzt. Der Prozessor 29 wird daraufhin eine Temperatur-Meßschaltung 31 schließen, der die Stromquelle 27 an die Meßbrücke 28 anlegt. Das Potential $U_{34}$ und $U_{12}$ der Meßpunkte 32 und 33 der Brücke 28 werden registriert und im Prozessor 29 zur Bestimmung der Temperatur des Ventilgehäuses 15 ausgewertet.

Für Temperatur-Meßaufnahmen wird mittels eines Steuerpulses der Temperatur-Meßschalter 31 geschlossen und damit die Widerstandsbrücke an die Spannung $U_B$ gelegt, die potentiale $U_{34}$ und $U_{12}$ vom

Prozessor 29 aufgenommen und zur Berechnung des augenblicklichen Widerstandswertes $R_4$ des Heizdrahtes 20 nach folgender Formel ausgewertet:

$$R_4 = \frac{\dfrac{U_{34}}{U_{12}}}{\dfrac{R_1 + R_2}{R_2} \quad \dfrac{U_{34}}{U_{12}}} \cdot R_3,$$

die sich aus dem Verhältnis $U_{12}/U_{34}$ ableiten läßt. Über den Widerstandswert $R_4$ des Drahtes 25 und der nachstehenden Widerstands-Temperaturfunktion wird schließlich die augenblickliche Temperatur T im Gehäuse 15 berechnet.

$$R_4 = R_{40} \left(1 + \sum_{i=1}^{n} a_i T^i\right)$$

In der Formel bedeuten $R_{40}$ den Widerstandwert der Wicklung 25 bei 0°C, n eine vom Widerstandsmaterial abhängige ganze Zahl und $a_i$ ein Temperaturkoeffizient.

In Abhängigkeit der auf diese Weise gemessenen Temperatur wird die Heizleistung für die Gehäusebeheizung 25 vom Prozessor 29 geregelt. Dieses erfolgt durch Veränderung der Pulsweiten einer pulsartigen Spannungsaufschaltung für den Widerstandsdraht.

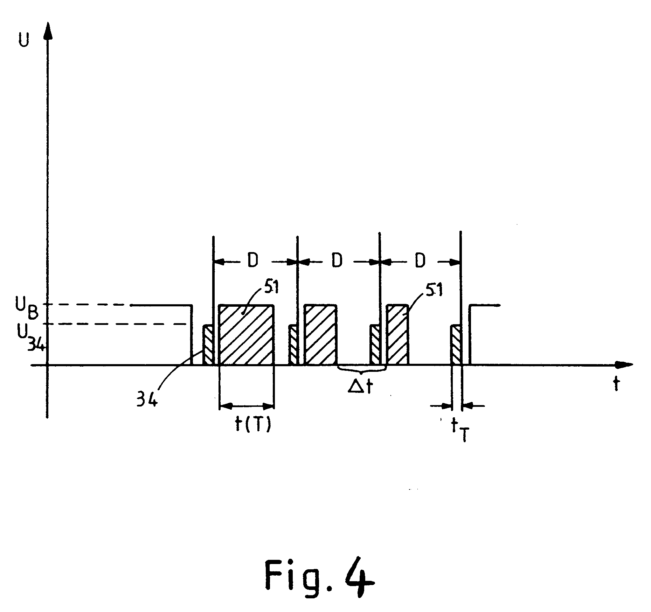

In Fig. 4 ist die am Heizdraht 25 anstehende Spannung U in Abhängigkeit von der Zeit t dargestellt. Während der Meßperiode, d.h. bei geschlossenem Temperatur-Meßschalter 31, steht am Heizdraht 25 eine Spannung $U_{34}$ an. Für Temperaturmessungen werden Meßimpulse 34 von konstanter Zeitdauer $t_T$ ausgegeben. Für die Lastaufschaltung wird der Schalter 35 geschlossen, wodurch der Heizdraht 25 die Batteriespannung $U_B$ erhält. Diese Lastaufschaltung erfolgt pulsartig mit einer von der gemessenen Temperatur T abhängenden Zeitdauer t(T). Durch eine feste Vorgabe des maximalen Stromwertes für den Heizdraht 25 kann somit durch entsprechende Pulsweitenmodulation eine Strombegrenzung für den Lastkreis erreicht werden. In der Zeitspanne $\Delta t$ zwischen zwei Lastpulsen 51 kann jeweils eine Temperaturmessung vorgenommen werden. In diesem Fall ist es vorteilhaft, wenn die Temperaturmessung und die Lastaufschaltung abwechselnd bei fest vorgegebener Taktfrequenz durchgeführt werden. Die Periodendauer D des Taktes richtet sich nach der maximal erforderlichen Pulsbreite $t(T)_{max}$ des Lastpulses 51.

Es sind selbstverständlich andere Regelungsarten möglich, wie z.B. daß die Widerstands bzw. Temperaturmessung zwar regelmäßig aber nicht nach jedem Lastimpuls 51 durchgeführt wird. Es ist auch eine kontinuierliche Spannungsregelung für den Lastbetrieb möglich, wobei für Temperaturmessungen der Lastbetrieb kurzzeitig unterbrochen wird.

Aufgrund der vorgegebenen Widerstandswerte der Heizdrähte 25 bzw. -wicklungen kann aus der Widerstandsmessung zusätzlich der Zustand des Widerstandsdrahtes 25 überwacht werden, indem Unterbrechungen und Kürzschlüsse erfaßt werden können.

Die Temperaturbestimmung kann periodisch in vorgegebenen Zeitabständen wiederholt werden. Sinkt die gemessene Temperatur auf einen vorbestimmten Wert, wird vom Prozessor 29 ein Heizschalter 35 betätigt, wodurch die Stromquelle 27 an die Heizwicklung 25 zur Erwärmung des Gehäuses 15 angelegt wird.

Für den Heizprozeß sind viele Verfahrensmethoden möglich. Eine Möglichkeit ist, die Heizdauer anhand von Geräteparametern (wie Volumen und Wärmeleitfähigkeit) des Ventiles bzw. des Gehäuses 15 für den Einzelfall vorzukalkulieren und für den Abschaltvorgang zu verwerten. Die Heizperiode kann auch abhängig von beispielsweise der Umgebungstemperatur verändert werden. Eine andere Möglichkeit ist, daß die Temperatur des Gehäuses 15 oder des Ventiles 12 kontinuierlich oder in Abständen auch während der Heizperiode überwacht wird und der Heizschalter 35 bei Erreichen einer vorgegebenen Temperaturgrenze wieder geöffnet wird.

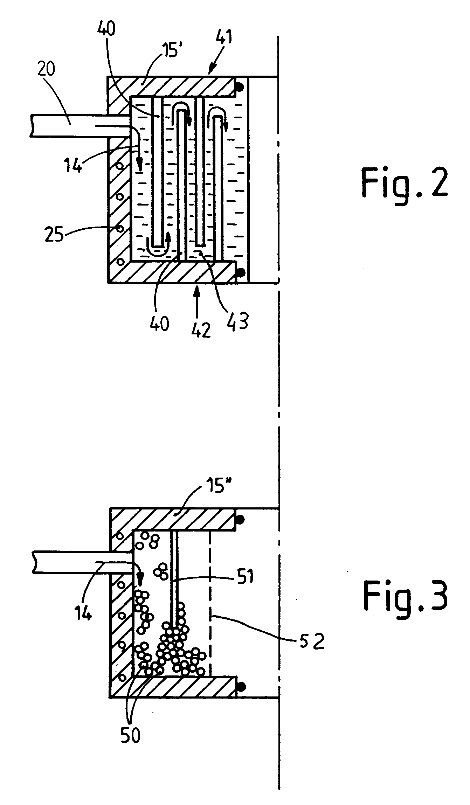

Auch die Ausgestaltung für die Wärmeeinkopplung in den das Ventil 10 umgebenden Brennstoff kann vielfältig sein. In den Fig. 2 und 3 sind weitere Ausführungsformen des Gehäuses 15 gezeigt, bei denen zur Verbesserung des Wärmeüberganges die Kontaktfläche zwischen Gehäuse 15 und Kraftstoff 14 durch entsprechende Maßnahmen vergrößert wird.

Fig. 2., in der die linke Hälfte eines Gehäuses 15' im Längsschnitt dargestellt ist, zeigt eine Ausführung mit Lamellen, die sich in den kraftstoffgefüllten Ringraum 16' erstrecken. Gemäß Fig. 2 sind konzentrisch angeordnete ringförmige Einsätze vorgesehen, die abwechselnd am oberen und unteren Stirnende 41 bzw. 42 des Gehäuses 15' befestigt sind und die am jeweiligen freien Ende einen Durchlaß 43 für den Kraftstoff 14 freilassen. Der Kraftstoff wird dabei labyrinthartig zwischen den Einsätzen 40 zum Ventil 10 geführt und nimmt dabei die durch die Heizwicklung 25 eingekoppelte und über die Einsätze 40 weitergeleitete Wärmeenergie auf. Es sind auch lamellenartige oder stabartige Einsätze möglich, die auch senkrecht zur Ventilachse angeordnet sein können.

Gemäß Fig. 3 erfolgt die Wärmeübertragungsflächen-Vergrößerung durch Kugeln 50, die im Gehäuse angesintert sein können. Durch Einsatz von Rippen 51 läßt sich die Anwendung von Kugeln 50 ergänzen. Es sind aber auch Siebeinsätze 52 denkbar, die radial oder axial im Innenraum 16 des Gehäusese 15 durchqueren.

## Patentansprüche

1. Kraftstoffventil mit einem Kraftstoffeinlaß (13), einer Mengendosiereinrichtung und einem Kraftstoffauslaß (12), dadurch gekennzeichnet, daß das Kraftstoffventil (10) einschließlich des Kraftstoffeinlasses (13) von einem mit Kraftstoff füllbaren und beheizbaren Gehäuse (15, 15', 15'') umgeben ist.

2. Kraftstoffventil nach Anspruch 1, dadurch gekennzeichnet, daß das Gehäuse (15, 15', 15'') als Wärmetauscher ausgebildet und mit oberflächenvergrößernden Maßnahmen versehen ist.

3. Kraftstoffventil nach Anspruch 1 oder 2, dadurch gekennzeichnet, daß für die Beheizung des Gehäuses (15) ein Heizwiderstand (25) mit positivem Temperaturkoeffizienten vorgesehen ist.

4. Kraftstoffventil nach einem der vorhergehenden Ansprüche, dadurch gekennzeichnet, daß für die Beheizung des Gehäuses (15) ein Heizwiderstand (25) vorgesehen ist, der mit einer pulsweiten modulierten Lastspannung betrieben wird.

5. Kraftstoffventil nach einem der vorhergehende Ansprüche, dadurch gekennzeichnet, daß dem beheizbaren Gehäuse (15) ein Steuergerät (26) zugeordnet ist, das in Abhängigkeit der Gehäusetemperatur oder der Umgebungstemperatur die Heizleistung (25) steuert.

6. Kraftstoffventil nach Anspruch 5, dadurch gekennzeichnet, daß der Heizwiderstand (25) zur Messung der Gehäusetemperatur verwendet wird.

7. Kraftstoffventil nach Anspruch 4 und 5 oder 6, dadurch gekennzeichnet, daß das Steuergerät (26) so ausgelegt ist, daß die Temperatur periodisch zwischen Lastspannungspulsen des Heizbetriebes gemessen wird.

## Claims

1. Fuel valve with a fuel inlet (13), a quantity metering device and a fuel outlet (12), characterised in that the fuel valve (10) including the fuel inlet (13) is surrounded by a heatable housing (15, 15', 15'') that can be filled with fuel.

2. Fuel valve according to Claim 1, characterised in that the housing (15, 15', 15'') is designed as a heat exchanger and equipped with surface-enlarging devices.

3. Fuel valve according to Claim 1 or 2, characterised in that a heating resistor (25) with positive temperature coefficient is provided for heating the housing (15).

4. Fuel valve according to one of the foregoing Claims, characterised in that a heating resistor (25) operated by means of a pulse-width-modulated load voltage is provided for heating the housing (15).

4

5. Fuel valve according to one of the foregoing Claims, characterised in that a control unit (26) is allocated to the heatable housing (15), which control unit (26) controls the heat output (25) in dependence of the housing temperature or ambient temperature.

6. Fuel valve according to Claim 5, characterised in that the heating resistor (25) is used for measuring the housing temperature.

7. Fuel valve according to the Claims 4 and 5 or 6, characterised in that the control unit (26) is designed in such a way that the temperature is periodically measured between the load voltage pulses of the heating operation.

**Revendications**

1. Soupape de carburant avec un orifice d'entrée de carburant (13), un dispositif de dosage du débit et un orifice de sortie de carburant (12), soupape de carburant caractérisée en ce qu'elle est entourée, y compris l'orifice d'entrée de carburant (13) d'un boîtier (15, 15', 15'') qui peut être rempli de carburant et chauffé.

2. Soupape de carburant selon la revendication 1, caractérisée en ce que le boîtier (15, 15', 15'') est constitué comme un échangeur de chaleur et est pourvu de moyens qui augmentent la surface.

3. Soupape de carburant selon la revendication 1 et 2, caractérisée en ce que l'on prévoit pour le chauffage du boîtier (15) une résistance de chauffage (25) à coefficient de température positif.

4. Soupape de carburant selon l'une des revendications précédentes, caractérisée en ce que l'on prévoit pour le chauffage du boîtier (15) une résistance de chauffage (25) qui est alimentée par une tension de charge à modulation d'impulsions en largeur.

5. Soupape de carburant selon l'une des revendications précédentes, caractérisée en ce qu'on associe au boîtier qui peut être chauffé (15), un appareil de commande (26) qui commande la puissance du chauffage (25) en fonction de la température du boîtier ou de la température ambiante.

6. Soupape de carburant selon la revendication 5, caractérisée en ce que la résistance de chauffage (25) est utilisée pour mesurer la température du boîtier.

7. Soupape de carburant selon la revendication 4 et 5 ou 6, caractérisée en ce que l'appareil de commande (26) est conçu de façon telle que la température soit mesurée périodiquement entre deux impulsions de tension de charge.

Fig.1

Fig.2

Fig.3

Fig. 4